# EUROPEAN PATENT SPECIFICATION

(11) **EP 3 652 869 B1**
(45) Date of publication and mention of the grant of the patent: **07.10.2026**
(21) Application number: 17746477.3
(22) Date of filing: 01.08.2017
(51) Int. Cl.: H04B 7/06, H04L 1/20, H04W 24/08, H04L 1/1812

(54) **A RECEIVING DEVICE AND A METHOD THEREOF**
EMPFÄNGERVORRICHTUNG UND VERFAHREN DAFÜR
DISPOSITIF DE RÉCEPTION ET PROCÉDÉ ASSOCIÉ

(43) Date of publication of application: 20.05.2020
(60) Divisional application: 26198567.5
(73) Proprietor: Huawei Technologies Co., Ltd., Longgang District Shenzhen, Guangdong 518129 (CN)
(72) Inventor: LINDOFF, Bengt, 164 40 Kista (SE); TUMULA, Chaitanya, 164 40 Kista (SE); WANG, Neng, 164 40 Kista (SE); HU, Wenquan, 164 40 Kista (SE); UDEN, Johan, 164 40 Kista (SE)
(74) Representative: Epping - Hermann - Fischer
(86) International application number: PCT/EP2017/069418
(87) International publication number: WO 2019/024988

(56) References cited:
- US-A1- 2013 250 782
- US-A1- 2014 204 781
- ZTE: "Radio Link Monitoring in NR", vol. RAN WG1, no. Hangzhou; 20170515 - 20170519, 14 May 2017 (2017-05-14), XP051272282, Retrieved from the Internet <URL:http://www.3gpp.org/ftp/Meetings_3GPP_SYNC/RAN1/Docs/> [retrieved on 20170514]
- AT&T: "Radio link monitoring", vol. RAN WG1, no. Qingdao, China; 20170627 - 20170630, 17 June 2017 (2017-06-17), XP051305024, Retrieved from the Internet <URL:http://www.3gpp.org/ftp/tsg_ran/WG1_RL1/TSGR1_AH/NR_AH_1706/Docs/> [retrieved on 20170617]
- ERICSSON: "Beam recovery in NR", vol. RAN WG2, no. Qingdao, China; 20170627 - 20170629, 26 June 2017 (2017-06-26), XP051301447, Retrieved from the Internet <URL:http://www.3gpp.org/ftp/Meetings_3GPP_SYNC/RAN2/Docs/> [retrieved on 20170626]
- INTERDIGITAL INC: "RLM/RLF for NR", vol. RAN WG2, no. Qingdao, China; 20170627 - 20170629, 26 June 2017 (2017-06-26), XP051301191, Retrieved from the Internet <URL:http://www.3gpp.org/ftp/Meetings_3GPP_SYNC/RAN2/Docs/> [retrieved on 20170626]

## Description

### Technical Field

The disclosure relates to a receiving device and a corresponding method. Furthermore, the disclosure also relates to a client device comprising such as a receiving device and a computer program.

### Background

The 5g cellular system, also called New Radio (NR), is currently being standardized. New Radio based on Orthogonal Frequency Division Multiplexing (OFDM) is targeting radio spectrum from below 1GHz up to and above 60 GHz. In order to allow for such diverse radio environments not only different system bandwidths will be supported, but also different numerologies, such as different sub-carrier spacing (SCS). Furthermore, for carriers over 10 GHz, multiple antennas and beamforming are assumed to be used in order to combat higher path loss at such high radio frequencies.

In beamforming, the next generation Node B (gNode B) transmission and reception point (TRP) may transmit data in several directions in different transmission beams. The User Equipment (UE) therefore has to tune its own receive antennas in different reception beam directions so as to communicate with the gNode B. However, in order for the UE to be able to detect and track transmission beams the UE needs to perform beam monitoring. Hence, a transmission and reception point on a regular basis transmits known reference signals in adjacent transmission beams, and the UE has to scan after the transmission beams to detect them, e.g. for possible beam switching in case of changes in the radio environment. Each possible connection between the UE and the transmission and reception point is called a beam pair link (BPL), which comprises of the best match between the transmission beams and reception beams. The principles behind beam monitoring can be compared to the cell search in legacy Long Term Evolution (LTE), Wideband Code Division Multiple Access (WCDMA) and High Speed Packet Access (HSPA) systems. In such systems the UE on a regular basis need to scan neighbouring cells for possible handover candidates.

The transmission and reception point will configure a set of BPLs for the UE to monitor and to maintain the connection with the network. Such a set may be denoted as SM = {BPL1, BPL2,..., BPLN}, where N ≥ 1. The configured beam pair link to monitor may be based on which beam pair link the UE has detected. This set can e.g. comprise of all the beam pair links associated with control and data channels between the transmission and reception point and the UE. The transmission and reception point will also configure a set of serving beam pair links which will transmit the associated control information to the UE. This set may be denoted as SS = {SBPL1, SBPL2,..., SBPLM}, where M ≥ 1, and is a subset to or equal to the set SM. The UE monitors the quality of serving beam pair links to decide if there is a beam link failure between the transmission and reception point and the UE.

In the earliest releases of LTE not supporting machine type communication modes the system bandwidth for the eNode B and UE was the same. However, New Radio supports up to 100 MHz, and the gNode B transmission bandwidth and the UE receiver bandwidth may not be the same. Hence, in New Radio the UE can be configured to monitor a small control channel bandwidth. Therefore, the concept of BandWidthParts (BWP) has been introduced in New Radio. The gNode B configures the UE with different BWPs, e.g. small bandwidths used for power saving and large bandwidths for high data throughput. The BWPs is defined in Physical Resource Blocks (PRBs) and the UE is informed about which PRBs to monitor. Therefore, with the concept of BWPs the UE may monitor control channels having different bandwidths.

Moreover, the UE in New Radio is configured to monitor at least one serving beam link pair associated with a control channel (such as e.g. Physical Downlink Control Channel (PDCCH)) with a certain configured bandwidth. The configuration is made by the gNode B in a setup procedure. The control channel in New Radio may be either a common control channel, i.e. a control channel monitored by several UEs or a UE specific control channel CCH. Once data is allocated to the UE, the control channel includes control information, such as scheduling information containing resource allocation, Modulation and Coding Scheme (MCS) information, Hybrid Automatic Repeat Request (HARQ), etc. for the associated downlink data channel (such as e.g. Physical Downlink Shared Channel (PDSCH)). In case of small amount of data, the corresponding data channel to be decoded can use the same configured UE receiver bandwidth as the control channel. In case the data requires larger bandwidth allocation, this is informed in the control channel to the UE and the UE retunes its radio receiver. Then the UE reconfigures for small reception bandwidth for power saving and continues monitoring the small bandwidth control channel. However, in order for the UE to keep track of beam link pairs, the UE need to monitor signal strengths of all the configured beam link pairs, e.g. from the set S_{M}. The gNode B configures the UE with a bandwidth where the reference signal should be measured. Thereafter, reference signals or pilot symbols are transmitted at time instances from the different beams, and the UE adapts its radio receiver accordingly so as to receive the reference signals and estimate the signal strength for each beam (serving as well as monitoring beams). The reference signal bandwidth may typically be wider than the small control channel bandwidth since the gNode B should have knowledge of the entire bandwidth for determining the correct MCS when transmitting a large amount of data to the UE.

Radio link monitoring is also used in LTE and the quality should be measured in terms of reliable detection of a PDCCH, for instance the PDCCH Block Error Rate (BLER) should be below a threshold, e.g. 1 % or 10 %. However, since the UE typically does not receive any PDCCH in a single frame a hypothetical PDCCH BLER is derived based on a measured Signal to Interference and Noise Ratio (SINR) determined from reference signals. The UE then determines whether the radio link is so called in-sync. or out-of-sync. in layer 1. In case of out-of-sync. the UE performs certain layer 3 tasks, such as declares radio link failure, and starts a connection re-establishment procedure. Similar techniques for beam link monitoring and beam link failure detection is to be defined for New Radio.

Document US 2013/250782 A1 relates to a method and a user equipment for monitoring a radio link for a wireless communication terminal. According to this document, a processor receives a first type of reference signal, wherein the processor monitors a first type of control channel and estimates a first synchronization condition associated with the radio link based on the first type of reference signal. Moreover, the processor monitors a second type of control channel and estimates a second synchronization condition associated with the radio link based on a second type of reference signal.

Document US 2014/204781 A1 relates to a method for determining a signal detection quality for a physical control channel. The method may include detecting, via a physical control channel, a first group of at least one radio resource element and a second group of at least one radio resource element, wherein the first group and the second group are non-contiguous in time and frequency with respect to radio resource elements of the physical control channel; and determining the signal detection quality based on the detected first group of resource elements and the detected second group of resource elements.

3GPP contribution R1-1707052 by ZTE with title "Radio Link Monitoring in NR" relates to NR's radio link monitoring (RLM)/ radio link failure (RLF). According to this document it has been agreed in RAN2 that physical layer should provide IS/OOS indication to higher layer just like LTE, then RRC can declare RLF based on the indication. Furthermore single procedure for both multi-beam and single beam operation is preferred by RAN2. In this document, RLM/RLF issues are discussed and following proposals have been made. Proposal 1: RAN1 should strive for a common RLM/RLF scheme for both single beam operation and multi-beam operation. Proposal 2: one RLM evaluation period should consist of multiple BLM evaluation periods. Proposal 3: Radio link quality evaluation for RLM/RLF is done over RLM evaluation period, based on the measurement result of monitored BPL in each BLM period. Proposal 4: physical layer will provide periodic IS/OOS indication to higher layer. The periodicity is FFS. Proposal 5: allow gNB to configure which serving cell will be provided IS/OOS indication.

3GPP contribution R1-1710425 by AT&T "Radio link monitoring" discusses the definition of beam failure events, provides supporting blockage statistics and the relationship with RLF under multi-beam operation, wherein following observations and proposals have been made: Observation 1: In mmWave spectrum, a UE could experience frequent beam failure events, potentially resulting in frequent beam switches (as frequent as every few seconds). Observation 2: The cell-based Radio Link Failure (RLF) procedure may be unable to detect blockage-based beam failure events. Proposal 1: NR should support Radio Link Monitoring (RLM) events and procedures to enable identification in the network and UE of beam failure, which operate at faster time-scales than traditional Radio Link Failure (RLF) procedures. Proposal 2: The timers and counters configured for determining beam failure at the UE and triggering beam recovery procedures should be independently configured from those configured for determining RLF at the UE. Proposal 3: The RLM metric (e.g. hypothetical PDCCH performance) computations for the purpose of determining IS and OOS status at the UE, should be performed on a per-beam basis (e.g. not utilizing a cell-quality metric). Proposal 4: The same set of beams which are monitored for the purpose of beam recovery can be utilized for RLM. Proposal 5: Both NR-SSS/DMRS of NR-PBCH (e.g. SS-Block signals) and CSI-RS are candidates for deriving the SINR-like metric used for RLM. Proposal 6: RANI should further consider whether an aperiodic out-of-sync indication may be triggered once all the serving/monitored beams of the UE have experienced beam failure for a configured number of consecutive intervals, while an aperiodic in-sync indication may be triggered once one or more of the beams are restored as part of a beam recovery procedure.

### Summary

An objective of embodiments of the invention is to provide a solution which mitigates or solves the drawbacks and problems of conventional solutions.

The above and further objectives are solved by the subject matter of the independent claims. Further advantageous implementation forms of the present invention can be found in the dependent claims. The present invention provides a receiving device for a wireless communication system and a method in a wireless communication system performed by the receiving device according to the independent claims.

Thus, the present invention is set out by the set of appended claims.. In the following, parts of the description and drawings referring to examples or implementations which are not covered by the claims are not presented as examples of the invention, but as examples useful for understanding the invention. Hence, the embodiments of the invention are determined by the appended claims

According to a first aspect of the disclosure, the above mentioned and other objectives are achieved with a receiving device for a wireless communication system, the receiving device being configured to
monitor a reference signal associated with a control channel, wherein the control channel is associated with a serving beam link;
determine a channel quality measure based on the reference signal;
declare a beam link failure for the serving beam link based on the channel quality measure and a configuration of the control channel.

The association between the reference signal and the control channel may in New Radio be that the reference signal is Quasi Co-Located (QCL) with the control channel. This means that the receiving device can assume that the reference signal and the control channel are transmitted from the same antenna port or beam. Hence, the radio channel quality is expected to be similar for the reference signal RS as for the control channel.

To determine the channel quality measure based on the reference signal may mean that the channel quality measure is computed using a representation of the reference signal e.g. in an algorithm for such computations. However, other methods can also be employed to determine the channel quality, such as the use of look up tables, specific mapping methods and functions, hardware implementations, etc.

A beam link failure for a serving beam link can be understood as a situation when the quality of the serving beam link is so low that control information transmitted on an associated control channel cannot be reliably detected. A beam link failure for a serving beam link can trigger a beam link failure recovery procedure or any other suitable procedure. Such procedures are generally defined in communication standards.

The receiving device according to the first aspect provides a number of advantages over conventional solutions. By also considering the configuration of the control channel a more reliable solution for declaring beam link failure is provided compared to conventional solutions. A more reliable solution can herein mean that the declaration of a beam link failure according to the disclosure is made at a radio channel condition that more truly corresponds to radio channel quality in which decoding of the control channel is unreliable compared to conventional solutions.

In an implementation form of a receiving device according to the first aspect, the receiving device is configured to
declare the beam link failure for the serving beam link based on a comparison of the channel quality measure to a channel quality threshold value, wherein the channel quality threshold value is dependent on the configuration of the control channel.

By comparing the channel quality measure with the channel quality threshold value a low complex and effective solution for declaring beam link failure is provided.

In an implementation form of a receiving device according to the first aspect, the receiving device is configured to
determine a hypothetical error rate for the control channel based on the channel quality measure and the configuration of the control channel;
declare the beam link failure for the serving beam link based on the hypothetical error rate for the control channel.

An advantage with this implementation form is that by using a hypothetical error rate for the control channel an even more reliable solution for declaring a beam link failure is provided.

In an implementation form of a receiving device according to the first aspect, the receiving device is configured to
declare the beam link failure for the serving beam link based on a comparison of the hypothetical error rate to an error rate threshold value.

An advantage with this implementation form is that by using an error rate threshold value a low complex and effective solution for declaring beam link failure is provided.

In an implementation form of a receiving device according to the first aspect, the error rate threshold value is dependent on the configuration of the control channel.

An advantage with this implementation form is that since the error rate threshold value is dependent on the configuration of the control channel a very reliable threshold value is provided.

In an implementation form of a receiving device according to the first aspect, the hypothetical error rate is a hypothetical block error rate for the control channel.

The hypothetical block error rate is a good measure to use for declaring a beam link failure.

According to the disclosure, the control channel is associated with a plurality of serving beam links, and wherein the receiving device is configured to
declare the beam link failure for the plurality of serving beam links further based on the number of serving beam links in the plurality of serving beam links associated with the control channel.

An advantage with this implementation form is that since the number of serving beam links are considered an even more reliable solution for declaring beam link failure is provided.

The receiving device is configured to
declare the beam link failure for the serving beam link further based on the frequency range of the reference signal.

The frequency range in this disclosure relates to a bandwidth. That is, a frequency range has a certain bandwidth.

In this implementation form the actual frequency range of the reference signal is considered. Therefore, an even more reliable solution for declaring beam link failure is provided.

The receiving device is configured to
monitor the reference signal in the same frequency range as the frequency range of the control channel.

By monitoring the reference signal in the same frequency range as the frequency range of the control channel a one to one mapping is provided. This has the advantage that the channel quality is estimated over same frequency range as the control channel giving a more reliable beam link failure declaration.

The receiving device is configured to
receive an instruction to monitor the reference signal in an updated frequency range;
monitor the reference signal in the updated frequency range in response to receiving the instruction.

An advantage with this implementation form is that the receiving device can be remotely configured to monitor updated frequency ranges. Therefore, the channel quality is estimated over currently configured control channel giving a more reliable beam link failure declaration.

In an implementation form of a receiving device according to the first aspect, the receiving device is configured to
declare the beam link failure for the serving beam link further based on a service class associated with the serving beam link.

By the also considering the service class associated with the serving beam link an even more reliable solution for declaring beam link failure is provided. Moreover, the declaration is also adapted to different service classes which have different requirements. E.g. for a highly critical services class a beam link failure threshold maybe set more conservative than for a non-critical service class.

The configuration of the control channel comprises a frequency range of the control channel and a transmission scheme of the control channel.

These two different configuration aspects of the control channel are important for determining beam link failure. By considering the frequency range a more reliable beam link failure detection is achieved. By considering the transmission scheme of the control channel a more reliable solution for determining beam link failure is provided.

In an implementation form of a receiving device according to the first aspect, the channel quality measure is at least one of: a Signal-to-Interference and Noise Ratio, a Reference Signal Received Quality, and a Reference Signal Received Power.

The above mentioned metrics are suitable quality measures to be used in conjunction with the receiving device according to the first aspect.

In an implementation form of a receiving device according to the first aspect, the reference signal is at least one of: Channel State Information Reference Symbols, Demodulation Reference Signals for New Radio Physical Downlink Control Channel, DMRS for New Radio Physical Broadcast Channel, New Radio Secondary Synchronization Signals, New Radio Primary Synchronization Signals, and reference symbols for at least one of time and frequency tracking.

The above mentioned reference signals are suitable reference signals to be used in conjunction with the receiving device according to the first aspect.

In an implementation form of a receiving device according to the first aspect, the control channel is a physical downlink control channel.

According to this implementation form it is the physical downlink control channel that should be considered.

According to a second aspect of the disclosure, the above mentioned and other objectives are achieved with a client device for a wireless communication system, the client device comprising a receiving device according to any of the implementation forms of the first aspect or to the first aspect as such.

In an implementation form of a client device according to the second aspect, the control channel is a common control channel for a plurality of client devices or a dedicated control channel for a single client device.

This implementation form can therefore be adapted to different control channel types.

In an implementation form of a client device according to the second aspect, the serving beam link is a beam pair link comprising a transmission beam of a remote transmission point and a corresponding receiving beam of the client device.

According to a third aspect of the disclosure, the above mentioned and other objectives are achieved with a method for a receiving device, the method comprises
monitoring a reference signal associated with a control channel, wherein the control channel is associated with a serving beam link;
determining a channel quality measure based on the reference signal;
declaring a beam link failure for the serving beam link based on the channel quality measure and a configuration of the control channel.

The method according to the third aspect can be extended into implementation forms corresponding to the implementation forms of the receiving device according to the first aspect. Hence, an implementation form of the method comprises the feature(s) of a corresponding implementation form of the receiving device.

The advantages of the methods according to the third aspect are the same as those for the corresponding receiving device according to the first aspect.

The disclosure also relates to a computer program, characterized in code means, which when run by processing means causes said processing means to execute any method according to the present disclosure. Further, the disclosure also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Further applications and advantages of the present disclosure will be apparent from the following detailed description.

### Brief Description of the Drawings

The appended drawings are intended to clarify and explain different examples of the present disclosure, in which:
- Fig. 1 illustrates a receiving device according to an example of the disclosure.
- Fig. 2 shows a declare beam link failure block according to an example of the disclosure.
- Fig. 3 shows a declare beam link failure block according to another example of the disclosure.
- Fig. 4 shows a method according to an example of the disclosure.
- Fig. 5 shows a method according to another example of the disclosure.
- Fig. 6 illustrates further aspects of the disclosure.
- Fig. 7 illustrates different mapping curves and different configurations of control channel.
- Fig. 8 shows a client device according to an example of the disclosure.
- Fig. 9 illustrates different control channel scenarios in a wireless communication system.

### Detailed Description

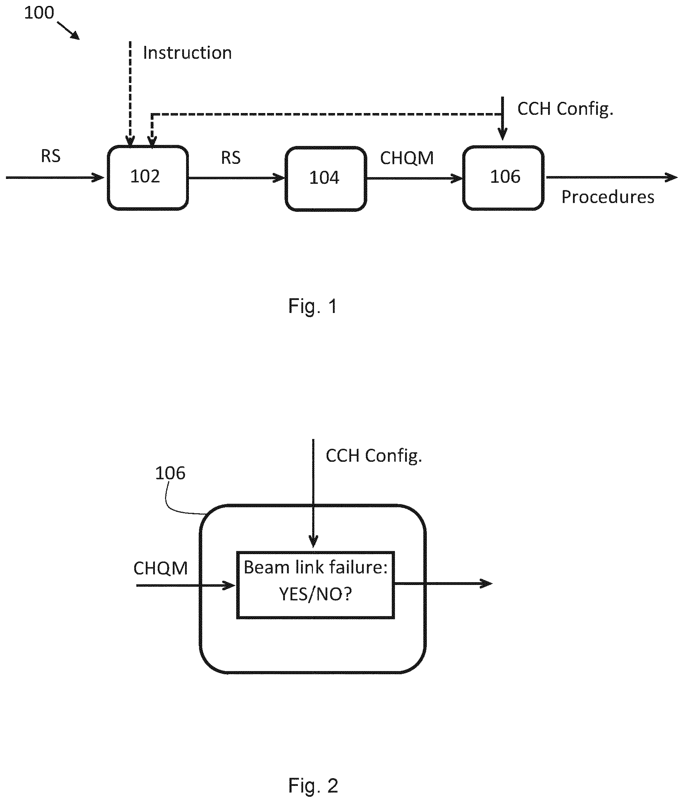

Fig. 1 illustrates a receiving device 100 according to an example of the disclosure. The receiving device 100 in Fig. 1 comprises a monitoring block 102, a determining block 104 and a link failure declaring block 106 connected to each other as illustrated in Fig. 1. A reference signal RS is monitored by the monitoring block 102. The monitored reference signal RS is associated with a control channel which in turn is associated with at least one serving beam link. The determination block 104 determines a channel quality measure CHQM based on the monitored reference signal RS which is forwarded by the monitoring block 102 to the determination block 104. The determination block 104 thereafter forwards the determined channel quality measure CHQM to the link failure declaring block 106. Finally, the link failure declaring block 106 declares a beam link failure for the serving beam link based on the determined channel quality measure CHQM and a configuration of the control channel CCH as illustrated with the arrows in Fig. 1.

When a beam link failure is declared different procedures may optionally be triggered which is illustrated with the outbound arrow from the link failure declaring block 106 in Fig. 1. For example, if a beam link failure is declared for the serving beam link the receiving device 100 can be configured to start a general beam recovery procedure. In case there are no other reliable beam pair links in the monitored set of beam pair links, which means that a beam pair link recovery procedure has failed, the receiving device 100 can declare a radio link failure (so called out-of-sync.) and start a radio link re-establishment procedure. Other procedures in response to a beam link failure are possible and such procedures are often predefined in communication standards, e.g. in LTE and New Radio.

It is to be understood that the receiving device 100 herein may be implemented with the functional blocks 102, 104, 106 as illustrated in Fig. 1. However, the receiving device 100 and therefore the functional blocks 102, 104, 106 according to the disclosure will typically be implemented in a processor(s) (not shown in the Figs.) such that the processor is configured to execute the actions or corresponding steps and functions performed and illustrated by the mentioned blocks in Fig. 1. The functional blocks could for example represent different sections of a program code running on the processor.

Fig. 1 also shows an optional dashed arrow illustrating configurations of the control channel CCH as input to the monitoring block 102. Thereby, the monitoring can be dependent on the mentioned configurations of the control channel CCH. For example, the configuration of the control channel CCH can be a frequency range of the reference signal RS to be monitored.

Optionally the receiving device 100 can also be configured to receive an instruction to monitor the reference signal RS in an updated frequency range. This is illustrated with the dashed arrow labelled "Instruction" as input to the monitoring block 102. In response to reception of the instruction the receiving device 100 monitors the reference signal RS in the updated frequency range.

The configuration of the control channel CCH generally relates to different transmission aspects or modes of the control channel CCH. At least a frequency range of the control channel CCH and/or a transmission scheme of the control channel CCH relates to the configuration of the control channel CCH. The mentioned configuration of the control channel CCH may be used in mapping functions so as to declare a beam link failure or not. Such a mapping function is generally a mapping function which takes one or more inputs and provides one or more outputs. For example, herein a mapping function may map a SINR value (i.e. one input) to a BLER value (i.e. one output). In another example, a mapping function may map a SINR value, a control channel CCH frequency range, and a transmission scheme (i.e. a multiple of inputs) to a BLER value (i.e. one output).

Since different control channel CCH frequency ranges may correspond to different encoded control channels CCHs, the mapping function may be different for different configured control channel CCH frequency ranges. Further, the mapping function may be dependent on the transmission scheme of the control channel CCH. The mapping functions may be determined beforehand based on lab experiments and stored in a look-up table in the receiving device 100. In other implementations, a network node or a remote server may configure the receiving device 100 with different mapping functions. In further implementations of the disclosure the mapping functions may be dependent on the deployment scenarios of base stations or other network access nodes.

Moreover, the mentioned reference signal RS is associated with the serving beam link. Many types of reference signals RSs can be employed. Following reference signals RSs types are suitable and can be used in implementations of the disclosure: Channel State Information Reference Symbols (CSI-RS), Demodulation Reference Signals (DMRS) for New Radio Physical Downlink Control Channel (NR-PDCCH), DMRS for New Radio Physical Broadcast Channel (NR-PBCH), New Radio Secondary Synchronization Signals (NR-SSS), New Radio Primary Synchronization Signals (NR_PSS), and reference symbols for at least one of time and frequency tracking. However, other reference signals RSs types may be used.

Furthermore, in order to obtain the channel quality measure CHQM based on the reference signal RS, filtering can be applied on samples of the reference signal RS. In this respect, samples of the reference signal RS are used for determining snap shots of the channel quality measure CHQM. Mentioned snap shots are thereafter filtered in order to obtain the channel quality measure CHQM used for beam failure detection. Non-limiting examples of different filtering techniques that may be employed are: averaging, Finite Impulse Response (FIR) filtering, and Infinite Impulse response (IIR) filtering.

Furthermore, the channel quality measure CHQM herein may be at least one of: a Signal-to-Interference and Noise Ratio (SINR), a Reference Signal Received Quality (RSRQ), and a Reference Signal Received Power (RSRP). However, also other channel quality measures can be used in conjunction with examples of the disclosure. For example, the RSRP/RSRQ may be based on methods used for computing the similar metric in the **LTE** standards Layer 3 mobility, including a Layer 1 filter and a Layer 3 filter. In other implementations, only a Layer 1 filtered version of the RSRP/RSRQ (i.e. L1-RSRP) is used, meaning that higher layer signalling or processing is not used in the determination of the channel quality measure CHQM.

Fig. 2 illustrates a possible implementation of the link failure declaring block 106 shown in Fig. 1. It is shown in Fig. 2 how the channel quality measure CHQM and the configuration of the control channel CCH is received as inputs to the link failure declaring block 106. Based on the mentioned inputs the link failure declaring block 106 declares whether a beam link failure has occurred or not for the serving beam link, i.e. YES or NO.

In an implementation, the receiving device 100 is configured to declare the beam link failure for the serving beam link based on a comparison of the channel quality measure CHQM to a channel quality threshold value. This implies that a beam link failure is declared if the channel quality measure CHQM is less than the channel quality threshold value. The value of the threshold may vary, e.g. depending on the supported service. For example, a high reliability service may require a high channel quality threshold value whilst for other services a lower channel quality threshold value may be enough. Hence, the channel quality threshold value can be dependent on the configuration of the control channel CCH.

Table 1 illustrates an example in which different configurations of the control channel CCH are associated with different SINR threshold values. In Table 1 different control channel CCH configurations Q1, Q2, Q3, and Q4 have corresponding SINR threshold values 5, 2, 0, and -3 dB, respectively. The different control channel CCH configurations, i.e. Q1, Q2, Q3, and Q4, may e.g. relate to different frequency ranges and/or different transmission schemes of the control channel CCH.

**Table 1**

| **CCH configuration** | **SINR threshold** |
|---|---|
| Q1 | 5 dB |
| Q2 | 2 dB |
| Q3 | 0 dB |
| Q4 | -3 dB |

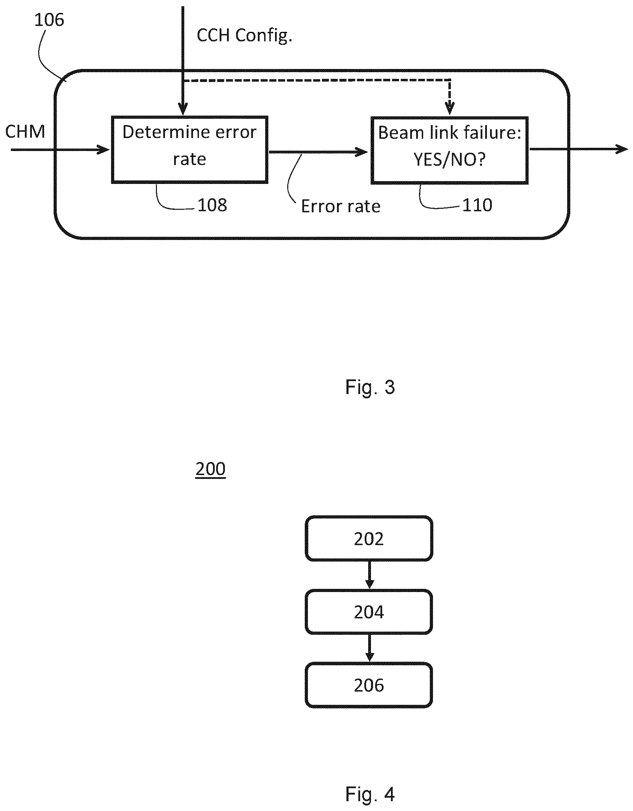

Fig. 3 illustrates another possible implementation of the link failure declaring block 106 comprising a first sub-block 108 and a second sub-block 110. It is shown in Fig. 3 how the channel quality measure CHQM and the configuration of the control channel CCH are received as inputs to the link failure declaring block 106. In contrast to the implementation of Fig. 2 in this implementation an error rate for the control channel CCH is first determined based on the received channel quality measure CHQM and the configuration of the control channel CCH in the first sub-block 108. Thereafter, based on the determined error rate for the control channel CCH the second sub-block 110 declares whether a beam link failure has occurred or not for the serving beam link, i.e. YES or NO. Hence, according to this implementation the configuration of the control channel CCH is used as an input in the determination of the error rate in the first sub-block 108, which is then used as basis for the declaration of the beam link failure.

The error rate for the control channel CCH relates to the decoding reliability of the control channel CCH. A suitable measure is the hypothetical error rate for the control channel CCH. Therefore, the receiving device 100 can be configured to declare a beam link failure for the serving beam link based on a comparison of the hypothetical error rate to an error rate threshold value, which can be chosen dependent on the configuration of the control channel CCH. In other words, for a first control channel configuration a first error rate threshold value (e.g. a BLER threshold) can be chosen or set and for a second control channel configuration a second (e.g. lower) error rate threshold value can be chosen or set. For example, assuming the first control channel configuration relates to a machine to machine (M2M) service and the second control channel configuration relates to a vehicle to vehicle (V2V) service. In this case the first error rate threshold value for M2M service may be chosen higher (e.g. 10 % BLER) than the second error rate threshold value (e.g. 1 % BLER) for V2V service. One should mention that nevertheless the mapping curves between signal quality and error rate threshold may be the same for both mentioned control channel configurations, e.g. because they use the same frequency range and/or code rate. In other words, the second sub-block 110 is configured to declare the beam link failure for the serving beam link based on the hypothetical error rate for the control channel CCH and the configuration of the control channel CCH which is illustrated with the dashed (optional) arrow in Fig. 3. Hence, in this case the hypothetical error rate is used in conjunction with the configuration of the control channel CCH for declaring a beam link failure or not. To summarize, in such an implementation the control channel configuration can be used for choosing the corresponding channel quality (SINR) to hypothetical error rate (BLER) mapping curve (in sub-block 108) and furthermore for determining the error rate threshold value above which a beam link failure would be declared (in sub-block 110).

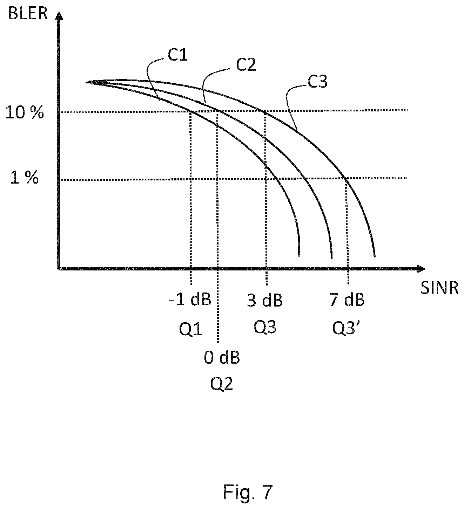

Fig. 7 together with Table 2 exemplarily illustrate the relation between configuration of the control channel CCH, associated BLER threshold above which beam link failure would be declared, corresponding SINR value and mapping curve. Different configurations of the control channel CCH are denoted Q1, Q2, Q3 and Q3'. Furthermore, the three mapping curves in this example are denoted C1, C2, and C3. In Fig. 7 two different BLER values are shown, namely 10 % and 1 %. The following can be noted from Fig. 7 in conjunction with Table 2:
- For control channel CCH configuration Q1 a BLER threshold of 10 % is set. In addition, mapping curve C1 is considered for control channel CCH configuration Q1 resulting in an SINR value of -1 dB for the corresponding BLER threshold of 10 %.
- For control channel CCH configuration Q2 a BLER threshold of 10 % is set. In addition, mapping curve C2 is considered for control channel CCH configuration Q2 resulting in an SINR value of 0 dB for the corresponding BLER threshold of 10 %.
- For control channel CCH configuration Q3 a BLER threshold of 10 % is set. In addition, mapping curve C3 is considered for control channel CCH configuration Q3 resulting in an SINR value of 3 dB for the corresponding BLER threshold of 10 %.
- For control channel CCH configuration Q3' a BLER threshold of 1 % is set. In addition, mapping curve C3 is considered for control channel CCH configuration Q3' resulting in an SINR value of 7 dB for the corresponding BLER threshold of 10 %.

It is noted that the channel configurations Q3 and Q3' relate to different control channel CCH configurations but use the same mapping curve, i.e. C3. For example, control channel CCH configuration Q3 could be associated with a more relaxed service class (accepting a higher BLER) compared to control channel CCH configuration Q3' but could relate to the same frequency range. Hence, control channel CCH configuration Q3' can only tolerate a lower BLER when compared to CCH configuration Q3 but still use the same mapping curve. Hence, control channel CCH configuration Q3' could relate to a more demanding service class for than the other mentioned control channel CCH configurations.

Further, control channel CCH configurations Q1, Q2, Q3 and Q3' could relate to different frequency ranges, especially for control channel CCH configurations having different mapping curves.

The mapping curves C1, C2, and C3 shown in Fig. 7 can be understood as representing different mapping functions which has been discussed previously. Of course, also any other intermediate value between SINR and BLER threshold can be derived from such mapping curves.

**Table 2**

| **CCH configuration** | **BLER threshold** | **SINR Value** | **Mapping curve** |
|---|---|---|---|
| Q1 | 10 % | -1 dB | C1 |
| Q2 | 10 % | 0 dB | C2 |
| Q3 | 10 % | 3 dB | C3 |
| Q3' | 1 % | 7 dB | C3 |

Fig. 4 shows a flow chart of a general method according to an example of the disclosure. The method 200 may be executed in a receiving device 100 according to the disclosure. The method 200 fully corresponds to the receiving device 100 shown in Fig. 1. The method 200 comprises monitoring 202 a reference signal RS associated with a control channel CCH which in turn is associated with a serving beam link. The method 200 further comprises determining 204 a channel quality measure CHQM based on the reference signal RS. The method 200 further comprises declaring 206 a beam link failure for the serving beam link based on the channel quality measure CHQM and a configuration of the control channel CCH.

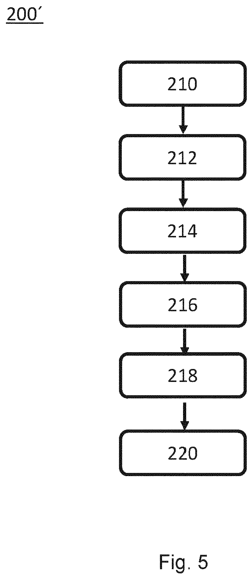

Fig. 5 shows a flow chart of a further method 200' according to an example of the disclosure. The method 200' in Fig. 5 comprises steps 210 to 220:
- At 210 the receiving device 100 performs a connection setup procedure towards a remote base station or its transmission and reception points and receives control information on a control channel CCH needed for beam link monitoring. Such control information may relate to one or more configurations of the control channel CCH, such as monitoring frequency range and centre frequencies of the control channel CCH, transmission scheme of the control channel CCH, frequency range and centre frequencies of the reference signal RS, control channel CCH Discontinuous Reception Mode (DRX) cycle parameters, reference signal RS transmission time instances for the serving beam link(s), and reference signal RS transmission time instances for neighbouring beam link(s). The control channel CCH may be a common control channel monitored by a plurality of receiving devices. However, in another example the control channel CCH may be a dedicated control channel only for a specific receiving device.
- At 212 the receiving device 100 monitors the control channel CCH for possible data reception as well as monitors the reference signal RS for the serving beam link which comprises a transmission beam and a reception beam, i.e. a serving beam pair link and monitoring beams.
- At 214 a channel quality measure CHQM is determined based on the monitored reference signal RS over a frequency range substantially corresponding to the frequency range of the control channel CCH. The channel quality measure CHQM may be at least one of a SINR, a RSRQ, and a RSRP.
- At 216 a hypothetical error rate for the control channel CCH is determined based on the channel quality measure CHQM determined in step 214. The hypothetical error rate may be the hypothetical BLER associated with the control channel CCH.
- At 218 a beam link failure is declared or not for the serving beam link based on the hypothetical error rate determined in step 2016 and the configuration for the control channel CCH as previously described.
- At 220 a beam link failure recovery procedure is started if a beam link failure has been declared in step 218.

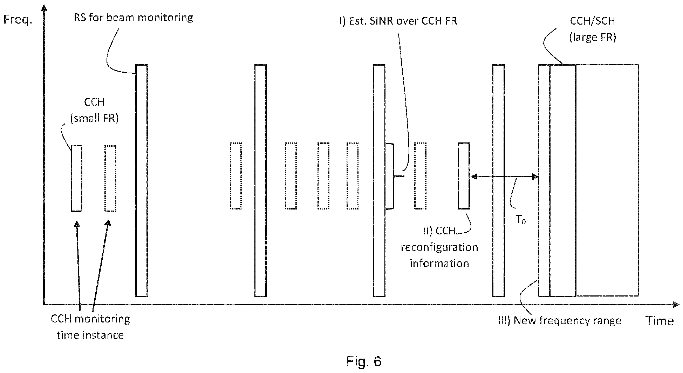

Fig. 6 illustrates further aspects of the disclosure. The x-axis shows time and the y-axis shows frequency in Fig. 6. Further, the small frequency ranges FRs illustrates control channel CCH monitoring time instances of which the dotted small rectangles (covering a small frequency range) are to be monitored by the receiving device 100 whilst the continuous small rectangles comprise actual control information to the receiving device 100. The reference signals RSs for beam monitoring are also shown in Fig. 6 illustrated as larger continuous rectangles covering a larger frequency range. It can also be noted that the control channel CCH (e.g. PDCCH) and the shared channel SCH (e.g. PDSCH) can have different frequency ranges FRs, denoted small and large FRs, respectively, in Fig. 6. Furthermore, it is also illustrated how the SINR is estimated over a configured control channel CCH frequency range for beam monitoring, see I in Fig. 6. The estimated SINR is used for determining a hypothetical error rate as previously described. In case a large amount of data is allocated to the receiving device 100, the network node transmits frequency range reconfiguration information to the receiving device 100 (such as mentioned instruction in connection with Fig. 1) in the control channel CCH, see II in Fig. 6. The receiving device 100, after having decoded the control channel information adapts its radio receiver frequency range to the new wide frequency range and receives data in that frequency range. In order for the receiving device 100 to be able to retune its radio receiver a time delay of T₀ between the control channel CCH reconfiguration information and the adaptation to the new wide frequency range is needed. In other scenarios, the control channel CCH may be configured on different centre frequencies and may also have different configured frequency ranges and hence the receiving device 100 in this case needs to estimate the SINR or a corresponding channel quality metric over respective control channel CCH frequency range prior to determining the metric associated with the detection reliability of the control channel CCH.

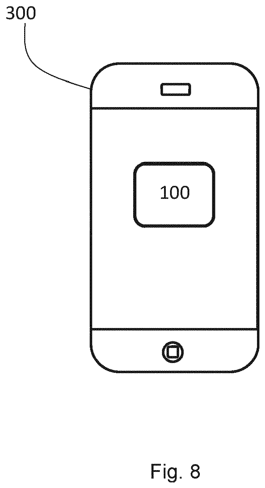

Fig. 8 shows a client device 300 according to an example of the disclosure. The client device 300 comprises a receiving device 100 according to examples of the disclosure. The client device 300 herein may be denoted as a user device, a User Equipment (UE), a mobile station, an internet of things (IoT) device, a sensor device, a wireless terminal and/or a mobile terminal, is enabled to communicate wirelessly in a wireless communication system, sometimes also referred to as a cellular radio system. The UEs may further be referred to as mobile telephones, cellular telephones, computer tablets or laptops with wireless capability. The UEs in the present context may be, for example, portable, pocket-storable, hand-held, computer-comprised, or vehicle-mounted mobile devices, enabled to communicate voice and/or data, via the radio access network, with another entity, such as another receiver or a server. The UE can be a Station (STA), which is any device that contains an IEEE 802.11-conformant Media Access Control (MAC) and Physical Layer (PHY) interface to the Wireless Medium (WM). The UE may also be configured for communication in 3GPP related **LTE** and LTE-Advanced, in WiMAX and its evolution, and in fifth generation wireless technologies, such as New Radio.

In further examples of the disclosure, the serving beam link is a beam pair link BPL comprising a transmission beam of a remote transmission point and a corresponding receiving beam of the client device 300.

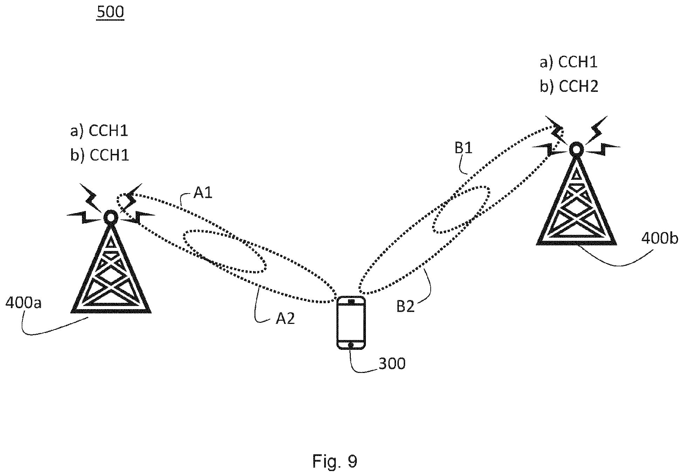

Fig. 9 illustrates yet further implementations of the disclosure in a wireless communication system 500. As previously mentioned, the transmission scheme for the control channel CCH may be considered for declaring a beam link failure. In particular, the transmission scheme may determine a mapping function used for declaring a beam link failure. Typically, the transmission scheme may relate to transmit diversity schemes used for the control channel CCH. Fig. 9 illustrates two different transmit diversity schemes. In Fig. 9 two different base stations, namely 400a and 400b, are transmitting transmission beam links A1 and B1, respectively, to a client device 300. The respective reception beams A2 and B2 of the client device 300 are also shown in Fig. 9.

In example a) of Fig. 9 the transmission beam links A1 and B1 are associated with the same control channel CCH, i.e. CCH1. For instance, if the configured control channel CCH transmission scheme is such that the client device 300 can combine the control channel CCH information from a plurality of serving beam links (i.e. same control channel CCH transmitted over several serving beam links) a sum SINR value or a maximum SINR value over the plurality of serving beam links may be used for declaring a beam link failure. Since it is the same control information transmitted in both beam links A1 and B1, the receiving device 100 can coherently combine the soft values of the control channel which means that the sum SINR value is a good indication of the radio channel quality of the control channel CCH. However, in case the receiving device 100 cannot coherently combine the soft bits of the control channel CCH, the best of beam links A1 and B1 indicates the performance and hence the maximum SINR value is the best indication of the radio channel quality of the control channel CCH in this case.

In example b) of Fig. 9, the transmission beam links A1 and B1 are associated with different control channels CCHs, i.e. CCH1 and CCH2, respectively. In this case, the client device 300 cannot combine the control channel CCH information transmitted from the different base stations since different control channels CCHs are associated with different serving beam links. Therefore, other mapping functions may be applicable for declaring a beam link failure. For example, the minimum SINR value over the serving beam links can be used in this respect since both beam links A1 and B1 need to be monitored and hence the performance is set by the worst beam link in this case.

Furthermore, any method according to examples of the disclosure may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that examples of the receiving device 100 and the client device 300 comprises the necessary communication capabilities in the form of e.g., functions, means, units, elements, etc., for performing the present solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the present solution.

Especially, the processor(s) of the receiving device 100 and the client device 300 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

## Claims

1. A receiving device (100) for a wireless communication system (500), the receiving device (100) being configured to:
monitor a reference signal, RS, associated with a control channel, CCH, wherein the CCH is associated with a serving beam link;
determine a channel quality measure, CHQM, based on the RS; and
declare a beam link failure for the serving beam link based on the CHQM, a frequency range of the RS and a configuration of the CCH,
wherein the configuration of the CCH is at least one of a frequency range of the CCH and a transmission scheme of the CCH,
wherein the RS is monitored in the same frequency range as the frequency range of the CCH, and
wherein the receiving device (100) is configured to: receive an instruction to monitor the RS in an updated frequency range; and monitor the RS in the updated frequency range in response to receiving the instruction.

2. The receiving device (100) according to claim 1, configured to
declare the beam link failure for the serving beam link based on a comparison of the CHQM to a channel quality threshold value, wherein the channel quality threshold value is dependent on the configuration of the CCH.

3. The receiving device (100) according to claim 1 or 2, configured to
determine a hypothetical error rate for the CCH based on the CHQM and the configuration of the CCH;
declare the beam link failure for the serving beam link based on the hypothetical error rate for the CCH.

4. The receiving device (100) according to claim 3, configured to
declare the beam link failure for the serving beam link based on a comparison of the hypothetical error rate to an error rate threshold value.

5. The receiving device (100) according to claim 4, wherein the error rate threshold value is dependent on the configuration of the CCH.

6. The receiving device (100) according to any of claims 3 to 5, wherein the hypothetical error rate is a hypothetical block error rate, BLER, for the CCH.

7. The receiving device (100) according to any of the preceding claims, wherein the CCH is associated with a plurality of serving beam links, and wherein the receiving device (100) is configured to
declare the beam link failure for the plurality of serving beam links further based on the number of serving beam links in the plurality of serving beam links.

8. The receiving device (100) according to any of the preceding claims, configured to
declare the beam link failure for the serving beam link further based on a service class associated with the serving beam link.

9. The receiving device (100) according to any of the preceding claims, wherein the CHQM is at least one of: a Signal-to-Interference and Noise Ratio, SINR, a Reference Signal Received Quality, RSRQ, and a Reference Signal Received Power, RSRP.

10. The receiving device (100) according to any of the preceding claims, wherein the RS is at least one of: Channel State Information Reference Symbols, CSI-RS, Demodulation Reference Signals, DMRS, for New Radio Physical Downlink Control Channel, NR-PDCCH, DMRS for New Radio Physical Broadcast Channel, NR-PBCH, New Radio Secondary Synchronisation Signal, NR-SSS, New Radio Primary Synchronisation Signal, NR-PSS, and reference symbols for at least one of time and frequency tracking.

11. A client device (300) for a wireless communication system (500), the client device (300) comprising a receiving device (100) according to any of the preceding claims.

12. The client device (300) according to claim 11, wherein the CCH, is a common control channel for a plurality of client devices or a dedicated control channel for a single client device.

13. The client device (300) according to claim 11 or 12, wherein the serving beam link is a beam pair link, BPL, comprising a transmission beam of a remote transmission point and a corresponding receiving beam of the client device (300).

14. A method for a receiving device (100) for a wireless communication system (500), the method (200) comprising:
monitoring (202) a reference signal, RS, associated with a control channel, CCH, wherein the CCH is associated with a serving beam link;
determining (204) a channel quality measure, CHQM, based on the RS;
declaring (206) a beam link failure for the serving beam link based on the CHQM, a frequency range of the RS and a configuration of the CCH,
wherein the configuration of the CCH is at least one of a frequency range of the CCH and a transmission scheme of the CCH,
wherein the RS is monitored in the same frequency range as the frequency range of the CCH, and
wherein the method (200) comprises: receiving, by the receiving device (100), an instruction to monitor the RS in an updated frequency range and monitoring, by the receiving device (100), the RS in the updated frequency range in response to receiving the instruction.

15. A computer program product comprising a computer program with program code for performing a method according to claim 14.

## Patentansprüche

1. Empfängervorrichtung (100) für ein drahtloses Kommunikationssystem (500), wobei die Empfängervorrichtung (100) zu Folgendem konfiguriert ist:
Überwachen eines Referenzsignals, RS, das einem Steuerungskanal, CCH, zugeordnet ist, wobei der CCH einer bedienenden Strahlverknüpfung zugeordnet ist;
Bestimmen eines Kanalqualitätsmaßes, CHQM, basierend auf dem RS; und
Erklären eines Strahlverknüpfungsausfalls für die bedienende Strahlverknüpfung basierend auf dem CHQM, einem Frequenzbereich des RS und einer Konfiguration des CCH,
wobei die Konfiguration des CCH mindestens eines von einem Frequenzbereich des CCH und einem Übertragungsschema des CCH ist,
wobei das RS in dem gleichen Frequenzbereich wie dem Frequenzbereich des CCH überwacht wird und
wobei die Empfängervorrichtung (100) zu Folgendem konfiguriert ist: Empfangen einer Anweisung, um das RS in einem aktualisierten Frequenzbereich zu überwachen; und Überwachen des RS in dem aktualisierten Frequenzbereich als Reaktion auf das Empfangen der Anweisung.

2. Empfängervorrichtung (100) nach Anspruch 1, die zu Folgendem konfiguriert ist
Erklären des Strahlverknüpfungsausfalls für die bedienende Strahlverknüpfung basierend auf einem Vergleich des CHQM mit einem Kanalqualitätsschwellenwert, wobei der Kanalqualitätsschwellenwert von der Konfiguration des CCH abhängig ist.

3. Empfängervorrichtung (100) nach Anspruch 1 oder 2, die zu Folgendem konfiguriert ist
Bestimmen einer hypothetischen Fehlerrate für den CCH basierend auf dem CHQM und der Konfiguration des CCH;
Erklären des Strahlverknüpfungsausfalls für die bedienende Strahlverknüpfung basierend auf der hypothetischen Fehlerrate für den CCH.

4. Empfängervorrichtung (100) nach Anspruch 3, die zu Folgendem konfiguriert ist
Erklären des Strahlverknüpfungsausfalls für die bedienende Strahlverknüpfung basierend auf einem Vergleich der hypothetischen Fehlerrate mit einem Fehlerratenschwellenwert.

5. Empfängervorrichtung (100) nach Anspruch 4, wobei der Fehlerratenschwellenwert von der Konfiguration des CCH abhängig ist.

6. Empfängervorrichtung (100) nach einem der Ansprüche 3 bis 5, wobei die hypothetische Fehlerrate eine hypothetische Blockfehlerrate, BLER, für den CCH ist.

7. Empfängervorrichtung (100) nach einem der vorhergehenden Ansprüche, wobei der CCH einer Vielzahl von bedienenden Strahlverknüpfungen zugeordnet ist und wobei die Empfängervorrichtung (100) zu Folgendem konfiguriert ist Erklären des Strahlverknüpfungsausfalls für die Vielzahl von bedienenden Strahlverknüpfungen ferner basierend auf der Anzahl an bedienenden Strahlverknüpfungen in der Vielzahl von bedienenden Strahlverknüpfungen.

8. Empfängervorrichtung (100) nach einem der vorhergehenden Ansprüche, die zu Folgendem konfiguriert ist
Erklären des Strahlverknüpfungsausfalls für die bedienende Strahlverknüpfung ferner basierend auf einer Dienstklasse, die der bedienenden Strahlverknüpfung zugeordnet ist.

9. Empfängervorrichtung (100) nach einem der vorhergehenden Ansprüche, wobei das CHQM mindestens eines von Folgendem ist: einem Signal-zu-Interferenz-und-Rausch-Verhältnis, SINR, einer Referenzsignalempfangsqualität, RSRQ, und einer Referenzsignalleistungsaufnahme, RSRP.

10. Empfängervorrichtung (100) nach einem der vorhergehenden Ansprüche, wobei das RS mindestens eines von Folgendem ist: Kanalzustandsinformationsreferenzsymbolen, CSI-RS, Demodulationsreferenzsignalen, DMRS, für einen physikalischen New-Radio-Downlink-Steuerungskanal, NR-PDCCH, DMRS für einen physikalischen New-Radio-Rundrufkanal, NR-PBCH, einem sekundären New-Radio-Synchronisationssignal, NR-SSS, einem primären New-Radio-Synchronisationssignal, NR-PSS, und Referenzsymbolen für mindestens eine einer Zeit- und einer Frequenzverfolgung.

11. Client-Vorrichtung (300) für ein drahtloses Kommunikationssystem (500), wobei die Client-Vorrichtung (300) eine Empfängervorrichtung (100) nach einem der vorhergehenden Ansprüche umfasst.

12. Client-Vorrichtung (300) nach Anspruch 11, wobei der CCH ein gemeinsamer Steuerungskanal für eine Vielzahl von Client-Vorrichtungen oder ein dedizierter Steuerungskanal für eine einzelne Client-Vorrichtung ist.

13. Client-Vorrichtung (300) nach Anspruch 11 oder 12, wobei die bedienende Strahlverknüpfung eine Strahlpaarverknüpfung, BPL, ist, umfassend einen Übertragungsstrahl eines entfernten Übertragungspunkts und einen entsprechenden Empfängerstrahl der Client-Vorrichtung (300).

14. Verfahren für eine Empfängervorrichtung (100) für ein drahtloses Kommunikationssystem (500), wobei das Verfahren (200) Folgendes umfasst:
Überwachen (202) eines Referenzsignals, RS, das einem Steuerungskanal, CCH, zugeordnet ist, wobei der CCH einer bedienenden Strahlverknüpfung zugeordnet ist;
Bestimmen (204) eines Kanalqualitätsmaßes, CHQM, basierend auf dem RS;
Erklären (206) eines Strahlverknüpfungsausfalls für die bedienende Strahlverknüpfung basierend auf dem CHQM, einem Frequenzbereich des RS und einer Konfiguration des CCH,
wobei die Konfiguration des CCH mindestens eines von einem Frequenzbereich des CCH und einem Übertragungsschema des CCH ist,
wobei das RS in dem gleichen Frequenzbereich wie dem Frequenzbereich des CCH überwacht wird und
wobei das Verfahren (200) Folgendes umfasst: Empfangen, durch die Empfängervorrichtung (100), einer Anweisung, um das RS in einem aktualisierten Frequenzbereich zu überwachen, und Überwachen, durch die Empfängervorrichtung (100), des RS in dem aktualisierten Frequenzbereich als Reaktion auf das Empfangen der Anweisung.

15. Computerprogrammprodukt, umfassend ein Computerprogramm mit einem Programmcode zum Durchführen eines Verfahrens nach Anspruch 14.

## Revendications

1. Dispositif de réception (100) pour un système de communication sans fil (500), le dispositif de réception (100) étant configuré pour :
surveiller un signal de référence, RS, associé à un canal de commande, CCH, dans lequel le CCH est associé à une liaison de faisceau de desserte ;
déterminer une mesure de qualité de canal, CHQM, sur la base du RS ; et
déclarer une défaillance de liaison de faisceau pour la liaison de faisceau de desserte sur la base de la CHQM, d'une plage de fréquences du RS et d'une configuration du CCH,
dans lequel la configuration du CCH est au moins l'un d'une plage de fréquences du CCH et d'un schéma de transmission du CCH,
dans lequel le RS est surveillé dans la même plage de fréquences que la plage de fréquences du CCH, et
dans lequel le dispositif de réception (100) est configuré pour : recevoir une instruction pour surveiller le RS dans une plage de fréquences mise à jour ; et surveiller le RS dans la plage de fréquences mise à jour en réponse à la réception de l'instruction.

2. Dispositif de réception (100) selon la revendication 1, configuré pour
déclarer la défaillance de liaison de faisceau pour la liaison de faisceau de desserte sur la base d'une comparaison de la CHQM à une valeur seuil de qualité de canal, dans lequel la valeur seuil de qualité de canal dépend de la configuration du CCH.

3. Dispositif de réception (100) selon la revendication 1 ou 2, configuré pour
déterminer un taux d'erreur hypothétique pour le CCH sur la base de la CHQM et de la configuration du CCH ;
déclarer la défaillance de liaison de faisceau pour la liaison de faisceau de desserte sur la base du taux d'erreur hypothétique pour le CCH.

4. Dispositif de réception (100) selon la revendication 3, configuré pour
déclarer la défaillance de liaison de faisceau pour la liaison de faisceau de desserte sur la base d'une comparaison du taux d'erreur hypothétique à une valeur seuil de taux d'erreur.

5. Dispositif de réception (100) selon la revendication 4, dans lequel la valeur seuil de taux d'erreur dépend de la configuration du CCH.

6. Dispositif de réception (100) selon l'une quelconque des revendications 3 à 5, dans lequel le taux d'erreur hypothétique est un taux d'erreur de bloc hypothétique, BLER, pour le CCH.

7. Dispositif de réception (100) selon l'une quelconque des revendications précédentes, dans lequel le CCH est associé à une pluralité de liaisons de faisceau de desserte, et dans lequel le dispositif de réception (100) est configuré pour déclarer la défaillance de liaison de faisceau pour la pluralité de liaisons de faisceau de desserte en outre sur la base du nombre de liaisons de faisceau de desserte dans la pluralité de liaisons de faisceau de desserte.

8. Dispositif de réception (100) selon l'une quelconque des revendications précédentes, configuré pour
déclarer la défaillance de liaison de faisceau pour la liaison de faisceau de desserte en outre sur la base d'une classe de service associée à la liaison de faisceau de desserte.

9. Dispositif de réception (100) selon l'une quelconque des revendications précédentes, dans lequel la CHQM est au moins l'un parmi : un rapport signal sur interférence plus bruit, SINR, une qualité reçue du signal de référence, RSRQ, et une puissance reçue du signal de référence, RSRP.

10. Dispositif de réception (100) selon l'une quelconque des revendications précédentes, dans lequel le RS est au moins l'un parmi : des symboles de référence d'informations d'état de canal, CSI-RS, des signaux de référence de démodulation, DMRS, pour un canal physique de commande de liaison descendante New Radio, NR-PDCCH, des DMRS pour un canal physique de diffusion New Radio, NR-PBCH, un signal de synchronisation secondaire New Radio, NR-SSS, un signal de synchronisation primaire New Radio, NR-PSS, et des symboles de référence pour au moins l'un d'un suivi temporel et d'un suivi fréquentiel.

11. Dispositif client (300) pour un système de communication sans fil (500), le dispositif client (300) comprenant un dispositif de réception (100) selon l'une quelconque des revendications précédentes.

12. Dispositif client (300) selon la revendication 11, dans lequel le CCH est un canal de commande commun pour une pluralité de dispositifs clients ou un canal de commande dédié pour un unique dispositif client.

13. Dispositif client (300) selon la revendication 11 ou 12, dans lequel la liaison de faisceau de desserte est une liaison par paire de faisceaux, BPL, comprenant un faisceau de transmission d'un point de transmission distant et un faisceau de réception correspondant du dispositif client (300).

14. Procédé pour un dispositif de réception (100) pour un système de communication sans fil (500), le procédé (200) comprenant :
la surveillance (202) d'un signal de référence, RS, associé à un canal de commande, CCH, dans lequel le CCH est associé à une liaison de faisceau de desserte ;
la détermination (204) d'une mesure de qualité de canal, CHQM, sur la base du RS ;
la déclaration (206) d'une défaillance de liaison de faisceau pour la liaison de faisceau de desserte sur la base de la CHQM, d'une plage de fréquences du RS et d'une configuration du CCH, dans lequel la configuration du CCH est au moins l'un d'une plage de fréquences du CCH et d'un schéma de transmission du CCH,
dans lequel le RS est surveillé dans la même plage de fréquences que la plage de fréquences du CCH, et
dans lequel le procédé (200) comprend : la réception, par le dispositif de réception (100), d'une instruction pour surveiller le RS dans une plage de fréquences mise à jour et la surveillance, par le dispositif de réception (100), du RS dans la plage de fréquences mise à jour en réponse à la réception de l'instruction.

15. Produit programme d'ordinateur comprenant un programme d'ordinateur avec un code de programme pour exécuter un procédé selon la revendication 14.
